# FASCICULE DE BREVET EUROPEEN

(11) **EP 4 048 511 B1**
(45) Date de publication et mention de la délivrance du brevet: **13.12.2023**
(21) Numéro de dépôt: 20807823.8
(22) Date de dépôt: 22.10.2020
(51) Int. Cl.: B29D 30/06, B60C 13/00, B29D 30/72

(54) **MOULE DE CUISSON D'UN PNEUMATIQUE COMPORTANT UN INSERT AMOVIBLE, ET PROCÉDÉ DE FABRICATION ASSOCIÉ**
REIFENVULKANISIERFORM MIT ABNEHMBAREM EINSATZ UND VERFAHREN ZUR HERSTELLUNG
TYRE CURING MOULD HAVING A REMOVABLE INSERT, AND ASSOCIATED MANUFACTURING METHOD

(30) Priorité: 24.10.2019 FR 1911924
(43) Date de publication de la demande: 31.08.2022
(73) Titulaire: COMPAGNIE GENERALE DES ETABLISSEMENTS MICHELIN, 63000 Clermont-Ferrand (FR)
(72) Inventeur: DEBORDEAUX, Héloïse, 63040 Clermont-Ferrand Cedex 9 (FR); DESVIGNES, Jean-Claude, 63040 Clermont-Ferrand Cedex 9 (FR); BAPTISTE, Alain, 63040 Clermont-Ferrand Cedex 9 (FR)
(74) Mandataire: M.F.P. Michelin
(86) Numéro de dépôt international: PCT/FR2020/051910
(87) Numéro de publication internationale: WO 2021/079070

(56) Documents cités:
- WO-A1-2009/007790
- WO-A1-2015/165862
- WO-A1-2016/000985
- US-A1- 2011 139 326

## Description

L'invention se situe dans le domaine de la fabrication des pneumatiques, et concerne plus particulièrement un moule de cuisson d'un pneumatique comportant un insert amovible, et un procédé de fabrication d'un tel moule.

La fabrication d'un pneumatique comprend une étape de cuisson pendant laquelle une ébauche de pneumatique est moulée et vulcanisée pour donner au pneumatique ses caractéristiques et son aspect final. La cuisson d'un pneumatique s'effectue dans un moule de cuisson. Un moule de cuisson comporte, dans une position de fermeture du moule, une surface de moulage formée, en particulier, d'une garniture, destinée à mouler la bande de roulement du pneumatique, et de deux coquilles, destinées à mouler les flancs du pneumatique.

La surface d'un pneumatique comprend un grand nombre de marquages généralement formés d'éléments moulés en protubérance. Les marquages visent d'une part à donner des informations techniques légales sur la qualité du pneumatique et, d'autre part, à permettre au consommateur de distinguer la marque et l'origine du produit. Les éléments moulés en protubérance sont obtenus par des éléments de moulage en creux, qui forment ensemble des motifs de marquage, situés sur la surface de moulage du moule.

Une partie des motifs de marquage doit être changée régulièrement. A cette fin, on utilise des inserts ou plaquettes disposés de manière amovible dans des logements réalisés sur la surface de moulage de la coquille. La surface de moulage de l'insert comporte un motif de marquage donné.

Un insert est généralement obtenu à partir d'une plaque d'aluminium sur laquelle le contour de l'insert et le motif de marquage sont gravés au moyen d'un procédé de détourage. L'insert est ensuite conformé et découpé de la plaque d'aluminium au moyen d'un procédé d'emboutissage. Un tel procédé présente l'avantage d'être simple et peu coûteux.

Par ailleurs, les développements récents de pneumatiques mettent en oeuvre des techniques visant à améliorer la visibilité des marquages et l'esthétique du pneumatique. Par exemple, la demande WO2007/045425, au nom des demanderesses, décrit un pneumatique dont la surface comprend une texture formée par des éléments moulés en relief. La texture est noire mate et ne renvoie pas ou peu la lumière, contrairement à une surface lisse du pneumatique. La texture est alors dite « à contraste élevé » car elle fait contraste avec des surfaces renvoyant davantage la lumière.

Ainsi, une surface lisse du pneumatique adjacente à une surface comportant une ou plusieurs variantes de ladite texture, permet de former un motif à contraste élevé décrivant un marquage ou un ornement. Par exemple, la demande WO2015/165862, au nom des demanderesses, décrit un insert destiné à être rapporté dans un moule de cuisson d'un pneumatique. L'insert comporte un motif destiné à mouler un symbole matriciel codé faisant contraste avec le flanc du pneumatique. Ledit motif comporte des ensembles d'éléments en relief adapté pour mouler des parties sombres ou claires du symbole matriciel codé.

Toutefois, en cherchant à couvrir le flanc d'un pneumatique d'un motif à contraste élevé, les demanderesses ont constaté que la surface de moulage d'un insert, hormis le motif de marquage, moule sur la surface du pneumatique une surface lisse qui renvoie la lumière et interfère avec le motif à contraste élevé qui l'entoure. Si le motif à contraste élevé améliore ainsi la visibilité des marquages formés par des inserts amovibles, ladite surface lisse dégrade l'esthétique du flanc du pneumatique et, par conséquent, limite la possibilité d'étendre circonférentiellement et radialement le motif à contraste élevé à l'ensemble du flanc.

Il existe donc un besoin de former un motif à contraste élevé s'étendant largement sur la surface d'un pneumatique dont l'esthétique n'est pas dégradée par la surface moulée par les inserts.

A cette fin, l'invention propose un moule de cuisson d'un pneumatique, ledit moule comprenant au moins un corps, telle une coquille ou une garniture, et au moins un insert monté de manière amovible dans un logement dudit corps, lesdits corps et insert formant ensemble une surface de moulage d'une partie du pneumatique, telle flanc ou la bande de roulement. La surface de moulage dudit corps comporte un premier motif de texture, et la surface de moulage dudit insert comporte un motif de marquage.

Par « motif », on entend que la surface de moulage comprend un ensemble d'éléments en relief de dimensions, de forme et d'agencement donnés. Les éléments en relief sont aptes à mouler, sur la surface externe du pneumatique, un objet de représentation, tel un marquage ou un ornement. Les éléments en relief sont en creux et/ou en protubérance par rapport à une surface de moulage lisse ou, autrement dit, sans motif. Une surface de moulage lisse forme, sur la surface externe du pneumatique, une surface lisse qui absorbe peu la lumière et qui parait plus clair.

Une surface de moulage comportant un « motif de texture » forme, sur la surface externe du pneumatique, une texture comportant des éléments en relief qui absorbent davantage la lumière qu'une surface lisse, et qui parait plus sombre, plus mate. Autrement dit, lesdits éléments en relief diminuent la capacité de la surface externe du pneumatique à réfléchir la lumière. En fonction des caractéristiques des éléments en relief du motif de texture, les propriétés d'absorption de la lumière de la texture varient, et la texture parait plus ou moins sombre.

Une surface de moulage comportant un « motif de marquage », forme, sur la surface externe du pneumatique, un marquage comportant des éléments en relief, tels des caractères ou des symboles. Un motif de marquage est constitué d'un ou plusieurs motifs de texture.

Selon l'invention, la surface de moulage dudit insert comporte, en outre, un deuxième motif de texture choisi de telle manière que la surface moulée par le deuxième motif de texture fait contraste avec la surface moulée par le motif de marquage, et ne fait sensiblement pas contraste avec la surface moulée par le premier motif de texture.

Le motif de texture de l'insert permet de mouler, sur la surface du pneumatique, une texture mate ne renvoyant pas ou peu la lumière. Ainsi, la visibilité de la surface du pneumatique moulée par l'insert et ne formant pas de marquage, est atténuée et, par conséquent, ne dégrade pas l'esthétique du pneumatique.

Dans un mode de réalisation de l'invention, l'écart de luminosité entre les surfaces moulées par le premier et le deuxième motif de texture est inférieur à 1,5 et de préférence, à 1, et l'écart de luminosité entre les surfaces moulées par le deuxième motif de texture et le motif de marquage est supérieur ou égal à 1,5 et, de préférence, à 3.

Par « luminosité », luminance ou clarté, on entend le paramètre qui caractérise la capacité d'une surface à réfléchir plus ou moins la lumière. Une surface moulée par un motif de texture donnée définit une zone de luminosité L* moyenne calculée sur l'ensemble de ladite zone. L'étendue de la luminosité sur ladite zone est inférieure à 1,5 et, de préférence, à 1.

La luminosité L* est exprimée dans une échelle allant de 0 à 100 selon le modèle colorimétrique L*a*b établi par la CIE (Commission internationale de l'éclairage) en 1976. La valeur 100 représente le blanc ou la réflexion totale; la valeur 0, le noir ou l'absorption totale. Dans ce modèle colorimétrique a* et b* sont des coordonnées de chromacité. Le modèle colorimétrique L*a*b indique la direction des couleurs : +a* va vers le rouge, -a* va vers le vert, +b* vers le jaune, et -b* vers le bleu. Le centre du diagramme est achromatique. Au fur et à mesure que les valeurs a* et b* augmentent, et que l'on s'éloigne donc du centre du diagramme, la saturation augmente.

La luminosité d'une surface moulée lisse est supérieure ou égale à 18 et, généralement, à 20. La luminosité d'une surface moulée, comportant un motif de texture, est inférieure à la luminosité d'une surface moulée lisse.

Un motif de texture de luminosité L* moyenne donnée peut être constitué d'éléments en relief identiques ou différents. Les éléments en relief dudit motif peuvent être agencés de manière aléatoire ou organisée.

De préférence, le deuxième motif de texture et, encore plus préférentiellement, le premier motif de texture, comprennent des éléments en relief en venue de matière, en creux ou en protubérance, de forme raccourcie ou allongée. Ainsi, il existe une grande variété de motifs de texture permettant de mouler des textures d'aspect varié.

Par « venue de matière », on entend que les éléments en relief formant le motif sont réalisés par enlèvement ou ajout de la matière réalisant la surface de moulage comportant le motif.

Avantageusement, les éléments en relief de forme raccourcie sont disposés avec une densité au moins égale à cinq éléments par mm², et ont une section moyenne circonscrite dans un cercle de diamètre compris entre 0,02 et 1 mm et, de préférence, entre 0,02 et 0,5 mm, et/ou les éléments de forme allongée sont disposés avec un pas entre chaque élément au plus égal à 0,5 mm, et ont une largeur moyenne comprise entre 0,02 et 0,5 mm.

Ainsi, les éléments en relief formant le motif de texture augmentent de manière très importante la superficie de la surface de moulage et, par conséquent, de la surface externe du pneumatique. L'absorption de la lumière par la texture ainsi moulée est donc plus forte.

Par ailleurs, un tel motif de texture permet de réduire sensiblement les problématiques liées à l'évacuation de l'air lors du moulage. Ainsi, le recours à des moyens d'éventation est réduit.

A titre d'exemple, les éléments de forme allongée prennent la forme de stries ou de lames, en profil de créneau de pyramide. De préférence, les éléments de forme allongée sont sensiblement parallèles entre eux. La largeur moyenne correspond à la moyenne des largeurs mesurées à intervalles réguliers dans la profondeur de la strie ou la hauteur de la lame. La hauteur de chaque lame ou la profondeur de chaque strie est comprise entre 0,05 et 0,5 mm. Les éléments de forme allongée peuvent être continus ou discontinus, présenter entre eux des différences de section, des courbures ou des angles, notamment dans leur longueur, et être de longueur variable.

A titre d'exemple, les éléments de forme raccourcie prennent la forme de brins, de cônes, ou de parallélépipèdes. La section moyenne de chaque brin correspond à la moyenne des sections mesurées à intervalles réguliers depuis la base du brin. Les brins ont une forme globalement conique avec une section diminuant dans la hauteur de ces brins. Les cônes présentent un angle au sommet compris entre 20° et 120°, et une section circulaire. Les parallélépipèdes ont des côtés de dimensions comprises entre 0,05 mm et 0,5 mm. La hauteur de chaque élément de forme raccourcie est comprise entre 0,05 et 0,5 mm.

De préférence, les éléments en relief sont séparés par des zones intermédiaires. En outre, les éléments en relief sont régulièrement répartis sur le moule de sorte que la distance entre chaque élément du motif est globalement similaire.

Alternativement, la section des éléments de forme raccourcie peut être circulaire, polygonale (par exemple hexagonale). Les structures carrée ou polygonale permettent d'organiser plus facilement l'agencement des éléments de forme raccourcis les uns par rapport aux autres, de sorte à limiter la surface des zones intermédiaires. De telles formes permettent d'augmenter la densité des éléments en relief du motif.

De préférence, les éléments en relief formant les motifs de texture sont agencés en ensembles, les éléments de chaque ensemble étant sensiblement identiques et adaptés pour mouler des textures de niveaux de contraste particulier.

Avantageusement, la surface de moulage desdits corps et inserts est réalisée selon un modèle particulier, ledit modèle étant divisé en une première partie et une deuxième partie, le premier motif de texture correspondant à la première partie du modèle, le deuxième motif de texture correspondant à la deuxième partie du modèle. La deuxième partie est distante au plus de 0,5 mm et, de préférence, de 0,2 mm, de la première partie de manière à obtenir une excellente continuité entre les parties.

Par ailleurs, durant leurs recherches, les demanderesses ont mis en évidence que la distance entre le motif gravé sur l'insert et le motif gravé sur l'élément de moulage ne doit pas excéder 0,5 mm, afin qu'un observateur distant d'au moins 1 m, ne puisse déceler de décalage. La perception de la qualité de l'esthétique du pneumatique est ainsi améliorée.

De préférence, la différence moyenne de hauteur ou de profondeur, entre les éléments en relief du premier motif de texture et du deuxième motif de texture, est inférieure à 0,2 mm et, de préférence, à 0,1 mm. Ainsi, une différence moyenne de hauteur ou de profondeur limitée, entre les première et deuxième textures, améliore les propriétés d'aérodynamisme du pneumatique.

Avantageusement, ledit corps prend la forme d'une coquille destinée à mouler le flanc du pneumatique, le premier motif de texture s'étendant sur la surface de moulage de ladite coquille de manière à former un motif annulaire entourant ledit logement, le deuxième motif de texture s'étendant sur la surface de moulage restante de l'insert.

Ainsi, la surface moulée par l'insert n'interfère pas avec la texture qui l'entoure, et améliore l'esthétique du flanc du pneumatique.

De préférence, le premier motif de texture et le deuxième motif de texture sont identiques ou équivalents. Par « identique », on entend que les éléments en relief constituant les motifs sont homogènes. Par « équivalent », on entend que les motifs sont aptes à mouler des textures comportant les mêmes propriétés d'absorption de la lumière.

Ainsi, un observateur distant d'au moins 1 m, ne peut pas déceler l'utilisation d'un insert amovible pour former un marquage. De plus, il est possible d'étendre un motif à contraste élevé sur la totalité du flanc d'un pneumatique.

L'invention concerne également un procédé de fabrication d'un moule de cuisson d'un pneumatique, ledit moule comprenant au moins un corps, telle une coquille ou une garniture, et au moins un insert, lesdits corps et insert formant ensemble une surface de moulage d'une partie du pneumatique, telle flanc ou la bande de roulement.

Le procédé selon l'invention comprend les étapes suivantes :
- on réalise un premier motif de texture sur la surface de moulage dudit corps,
- on réalise un motif de marquage sur la surface de moulage dudit insert,
- on réalise un deuxième motif de texture sur la surface de moulage dudit insert, le deuxième motif étant choisi de telle manière que la surface moulée par le deuxième motif de texture fait contraste avec la surface moulée par le motif de marquage, et ne fait pas ou peu contraste avec la surface moulée par le premier motif de texture,
- on monte, de manière amovible, l'insert dans un logement dudit corps.

De préférence, la surface de moulage desdits corps et inserts étant réalisée selon un modèle particulier, le procédé comprend les étapes suivantes :
- à l'aide de moyens de conception numériques, on divise le modèle en une première partie et une deuxième partie, le premier motif de texture correspondant à la première partie du modèle, le deuxième motif de texture correspondant à la deuxième partie du modèle,
- on grave, à l'aide d'un procédé de gravure à commande numérique, le premier motif sur ledit corps, selon la première partie du modèle, et le deuxième motif sur ledit insert, selon la deuxième partie du modèle,
la deuxième partie étant distante au plus de 0,5 mm et, de préférence, de 0,2 mm, avec la première partie.

L'étape consistant à diviser numériquement le modèle correspondant à la surface de moulage du corps et de l'insert, en vue d'opérer l'étape de gravure, permet de former une texture sur l'insert correspondant précisément aux souhaits des demanderesses. Les possibilités de représentation de marquages ou d'ornements sur la surface du pneumatique sont ainsi élargies.

Enfin, l'usage de moyens numériques permet d'améliorer la précision de fabrication de l'élément de moulage et, ainsi, de faciliter la maitrise de la distance entre le motif gravé sur l'insert et le motif gravé sur l'élément de moulage.

De préférence, on monte ledit insert dans ledit logement à l'aide de moyens de percussion comprenant une surface de percussion réalisée en un matériau mou, tel du nylon ou un matériau élastomérique. Ainsi, les éléments en relief des motifs de texture ne sont pas endommagés.

L'invention concerne encore un procédé de fabrication d'un pneumatique dans lequel on cuit une ébauche de pneumatique dans un moule de cuisson selon l'invention, et un pneumatique destiné à être monté sur la jante d'une roue fabriquée selon un procédé de fabrication d'un pneumatique selon l'invention.

L'invention sera mieux comprise grâce à la suite de la description, qui s'appuie sur les figures suivantes :
- la figure 1 est une vue en coupe simplifiée illustrant certains composants d'un moule de cuisson selon l'état de la technique ;
- la figure 2 est une vue de face illustrant certains composants du moule de cuisson de la figure 1 ;
- la figure 3 est une vue de face illustrant certains composants d'un moule de cuisson selon l'invention dans un premier exemple de réalisation ;
- la figure 4 est une vue de face illustrant certains composants d'un moule de cuisson selon l'invention dans un deuxième exemple de réalisation ;
- la figure 5 est une vue de face illustrant certains composants d'un moule de cuisson selon l'invention dans un troisième exemple de réalisation.

Sur les différentes figures, les éléments identiques ou similaires portent la même référence. Leur description n'est donc pas systématiquement reprise.

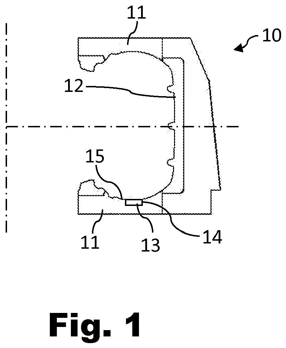

A la figure 1, on a illustré certains composants usuels d'un moule de cuisson 10 d'un pneumatique (non illustré), ledit moule comprenant au moins un corps, telle une coquille 11 ou une garniture 12, et un insert 13 monté de manière amovible dans un logement 14 dudit corps, lesdits corps et insert formant ensemble une surface de moulage 15 d'une partie du pneumatique, telle flanc ou la bande de roulement.

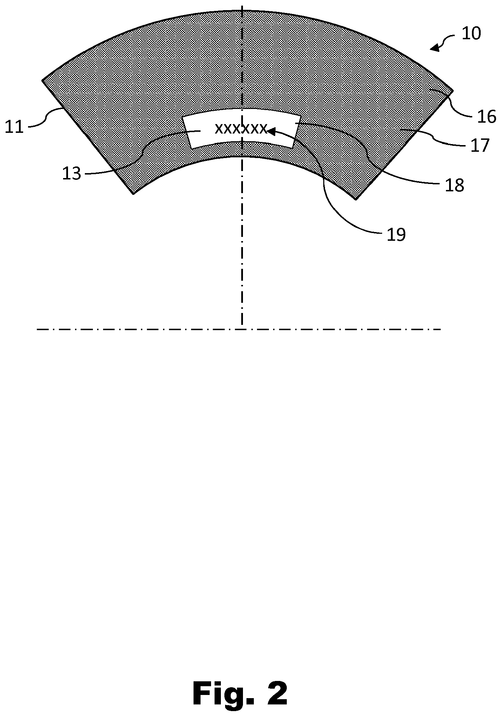

La figure 2 illustre plus particulièrement une partie de la coquille 11 et l'insert 13 du moule 10. La surface de moulage 16 de la coquille comporte un motif de texture 17. La surface de moulage 18 de l'insert comporte un motif de marquage 19. La surface de moulage de l'insert 18 qui ne comporte pas de motif de marquage, comporte une surface de moulage lisse. Ainsi, l'insert moule sur la surface du pneumatique une surface lisse faisant contraste avec le motif de texture 13 de la coquille.

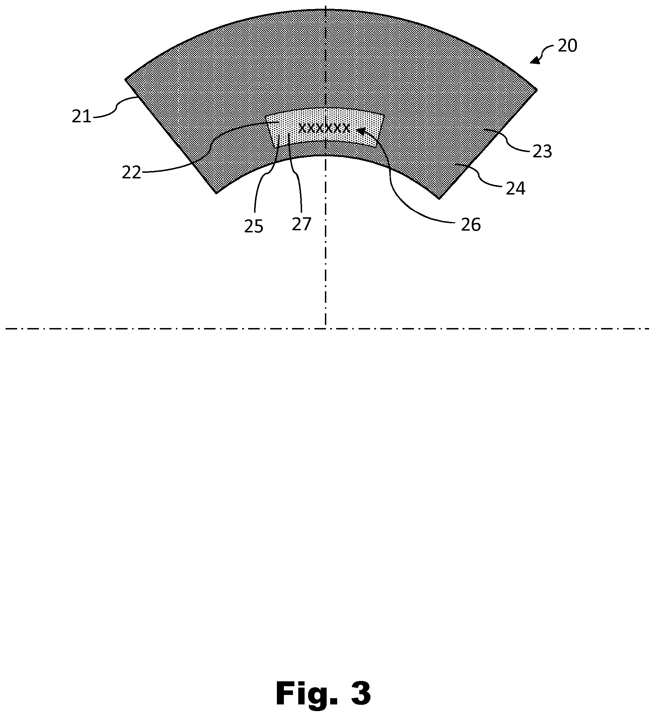

Le figure 3 illustre la coquille 21 et l'insert 22 d'un moule 20 selon l'invention selon un premier exemple de réalisation. La surface de moulage 23 de la coquille 21 comporte un premier motif de texture 24, et la surface de moulage 25 de l'insert 22 comporte un motif de marquage 26.

Selon l'invention, la surface de moulage de l'insert 25 comporte, en outre, un deuxième motif de texture 27 choisi de telle manière que la surface moulée par le deuxième motif de texture fait contraste avec la surface moulée par le motif de marquage 26, et ne fait pas ou peu contraste avec la surface moulée par le premier motif de texture 24.

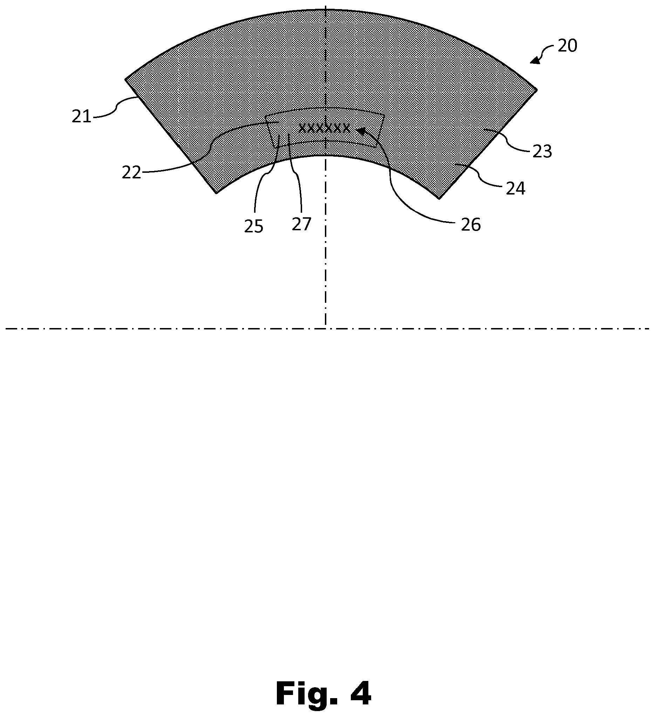

Le figure 4 illustre la coquille 21 et l'insert 22 du moule 20 selon l'invention selon un deuxième exemple de réalisation. Le premier motif de texture 24 et le deuxième motif de texture 27 sont identiques, ou équivalents en terme de propriété d'absorption de la lumière.

Le deuxième motif de texture et, de préférence, le premier motif de texture, comprennent des éléments (non représentés) en venue de matière. Les éléments en relief sont en creux ou en protubérance, de forme raccourcie ou allongée, les éléments de forme raccourcie étant disposés avec une densité au moins égale à cinq éléments par mm², et ayant une section moyenne circonscrite dans un cercle de diamètre compris entre 0,01 et 1 mm et, de préférence, entre 0,02 et 0,5 mm, les éléments de formes allongée étant disposés avec un pas entre chaque élément au plus égal à 0,5 mm, et ayant une largeur moyenne comprise entre 0,02 et 0,5 mm.

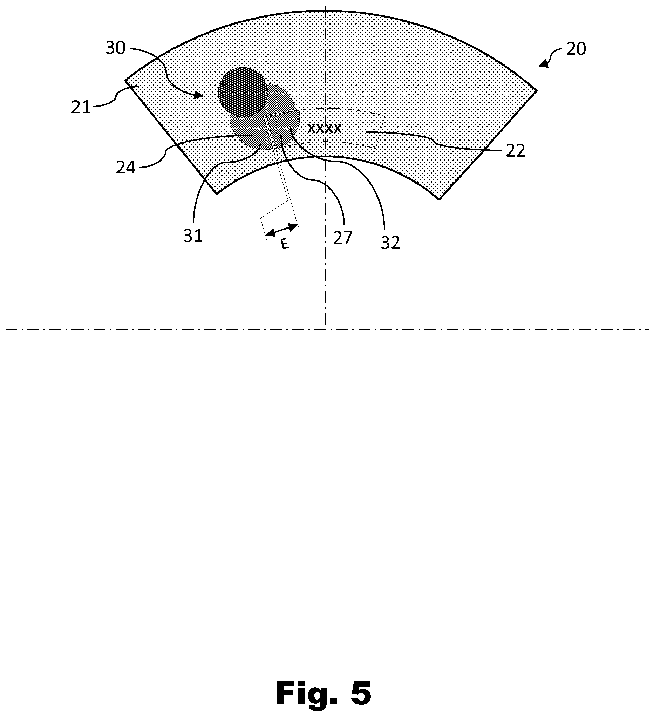

La figure 5 illustre la coquille 21 et l'insert 22 du moule 20 selon l'invention selon un troisième exemple de réalisation. La surface de moulage desdits corps et inserts est réalisée selon un modèle 30 particulier, ledit modèle étant divisé en une première partie 31 et une deuxième partie 32, le premier motif de texture 24 correspondant à la première partie du modèle, le deuxième motif 27 de texture correspondant à la deuxième partie du modèle, la deuxième partie est distante d'une distance E au plus de 0,5 mm et, de préférence, de 0,2 mm, avec la première partie.

Pour déterminer si la différence de luminosité entre les surfaces moulées par les différentes textures répond au besoin, on mesure la luminosité L* moyenne de chaque texture sur un pneumatique avec l'appareil de mesure approprié.

Dans un exemple non limitatif, l'appareil de mesure approprié est un spectro-colorimètre CM 700D de la marque KONICA-MINOLTA. Cet appareil est adapté pour mesurer :
- la luminosité L*1, L*2 d'une zone du pneumatique ;
- une composante a* qui définit une première nuance de couleur entre le rouge et le vert ;
- une composante b* qui définit une deuxième nuance de couleur entre le jaune et le bleu.

On positionne ledit appareil sur la zone du pneumatique que l'on veut mesurer et ledit appareil donne les valeurs des trois paramètres L*, a*, b* relatifs à ladite zone. Ces mesures sont effectuées avec le mode SCI (Mode de réflexion spéculaire incluse) paramétré à un angle de 10° et un réglage de la lumière de type D65 (réglage défini selon la Commission Internationale de l'Eclairage, CIE).

La fabrication d'un moule de cuisson 20 selon l'invention comprend les étapes suivantes.

A l'aide de moyens de conception numériques, on divise le modèle 30 en une première partie 31 et une deuxième partie 32, le premier motif de texture correspondant à la première partie du modèle, le deuxième motif de texture correspondant à la deuxième partie du modèle. De préférence, le contour du deuxième motif correspond au contour de l'insert 22.

Ensuite, à partir d'une plaque d'aluminium, on découpe l'insert selon le contour, puis on grave le motif de marquage au moyen d'un procédé de détourage. L'insert est ensuite conformé. Alternativement, les étapes de découpage et de gravure peuvent avoir lieu après l'étape de conformation. Le découpage et la gravure du motif de marquage peuvent être réalisés par des moyens de découpage et gravure au laser.

Ensuite, on grave, à l'aide d'un procédé de gravure à commande numérique, le premier motif de texture sur ledit corps, selon la première partie du modèle, et le deuxième motif de texture sur ledit insert, selon la deuxième partie du modèle.

Enfin, on monte, de manière amovible, l'insert dans un logement 24 de la coquille 21 à l'aide de moyens de percussion comprenant une surface de percussion réalisée en un matériau mou, tel du nylon ou un matériau élastomérique.

D'autres variantes et modes de réalisation de l'invention peuvent être envisagés sans sortir du cadre de ses revendications.

Ainsi, l'insert 22 est disposé dans le logement 14 avec un jeu de montage entre le contour du logement et le contour de l'insert, et on choisit le jeu de montage et les matériaux composant l'insert 22 et la coquille 21 de manière à ce que, lorsque le moule atteint une température donné, le jeu de montage soit résorbé en partie ou en totalité.

Ainsi, les bavures de gommes consécutives au jeu de montage entre le contour du logement et le contour de l'insert sont réduites, et il n'y a pas de coupure entre le motif de l'élément de moulage et le motif de l'insert, ce qui améliore la continuité du motif à contraste élevé moulé sur le pneumatique.

## Revendications

1. Moule de cuisson (20) d'un pneumatique, ledit moule comprenant au moins un corps, telle une coquille (21) ou une garniture, et au moins un insert (22) monté de manière amovible dans un logement dudit corps, lesdits corps et insert formant ensemble une surface de moulage d'une partie du pneumatique, telle flanc ou la bande de roulement,
la surface de moulage (23) dudit corps comportant un premier motif de texture (24), la surface de moulage (25) dudit insert comportant un motif de marquage (26),
**caractérisé en ce que** la surface de moulage dudit insert comporte, en outre, un deuxième motif de texture (27) choisi de telle manière que :
- l'écart de luminosité (L*) entre les surfaces moulées par le deuxième motif de texture (27) et le motif de marquage (26) est supérieur ou égal à 1,5 et de préférence à 3, de sorte que la surface moulée par le deuxième motif de texture fait contraste avec la surface moulée par le motif de marquage (26), et que
- l'écart de luminosité (L*) entre les surfaces moulées par le premier motif de texture (24) et le deuxième motif de texture (27) est inférieur à 1,5 et de préférence, à 1 de sorte que la surface moulée par le deuxième motif de texture ne fait pas ou peu contraste avec la surface moulée par le premier motif de texture (24).

2. Moule selon la revendication précédente dans lequel le deuxième motif de texture (27) et, de préférence, le premier motif de texture (24), comprennent des éléments en venue de matière, en creux ou en protubérance, de forme raccourcie ou allongée.

3. Moule selon la revendication précédente dans lequel les éléments de forme raccourcie sont disposés avec une densité au moins égale à cinq éléments par mm², et ont une section moyenne circonscrite dans un cercle de diamètre compris entre 0,01 et 1 mm et, de préférence, entre 0,02 et 0,5 mm, et/ou
les éléments de forme allongée sont disposés avec un pas entre chaque élément au plus égal à 0,5 mm, et ont une largeur moyenne comprise entre 0,02 et 0,5 mm.

4. Moule selon la revendication précédente dans lequel lesdits éléments sont agencés en ensembles, les éléments de chaque ensemble étant sensiblement identiques et adaptés pour mouler des textures de niveaux de contraste particulier.

5. Moule selon l'une des revendications précédentes dans lequel la surface de moulage desdits corps et inserts est réalisée selon un modèle particulier, ledit modèle étant divisé en une première partie et une deuxième partie, le premier motif de texture (24) correspondant à la première partie du modèle, le deuxième motif de texture (27) correspondant à la deuxième partie du modèle, la deuxième partie est distante au plus de 0,5 mm et, de préférence, de 0,2 mm, avec la première partie.

6. Moule selon l'une des revendications précédentes dans lequel la différence moyenne de hauteur ou de profondeur, entre le premier motif de texture (24) et le deuxième motif de texture (27), est inférieure à 0,2 mm et, de préférence, à 0,1 mm.

7. Moule selon l'une des revendications précédentes dans lequel ledit corps prend la forme d'une coquille (21) destinée à mouler le flanc du pneumatique,
le premier motif de texture (24) s'étendant sur la surface de moulage de ladite coquille de manière à former un motif annulaire entourant ledit logement,
le deuxième motif de texture (27) s'étendant sur la surface de moulage restante de l'insert (22).

8. Procédé de fabrication d'un moule de cuisson (20) d'un pneumatique, ledit moule comprenant au moins un corps, telle une coquille (21) ou une garniture, et au moins un insert (22), lesdits corps et insert formant ensemble une surface de moulage d'une partie du pneumatique, tel le flanc ou la bande de roulement, **caractérisé en ce que** :
- on réalise un premier motif de texture (24) sur la surface de moulage (23) dudit corps,
- on réalise un motif de marquage (26) sur la surface de moulage (25) dudit insert,
- on réalise un deuxième motif de texture (24) sur la surface de moulage (25) dudit insert, le deuxième motif étant choisi de telle manière que :
- l'écart de luminosité (L*) entre les surfaces moulées par le deuxième motif de texture (27) et le motif de marquage (26) est supérieur ou égal à 1,5 et de préférence à 3, de sorte que la surface moulée par le deuxième motif de texture fait contraste avec la surface moulée par le motif de marquage (26), et que
- l'écart de luminosité (L*) entre les surfaces moulées par le premier motif de texture (24) et le deuxième motif de texture (27) est inférieur à 1,5 et de préférence, à 1 de sorte que la surface moulée par le deuxième motif de texture ne fait pas ou peu contraste avec la surface moulée par le premier motif de texture (24).,
- on monte, de manière amovible, l'insert dans un logement dudit corps.

9. Procédé selon la revendication précédente dans lequel la surface de moulage desdits corps et inserts est réalisée selon un modèle particulier, et comprend les étapes suivantes :
- à l'aide de moyens de conception numériques, on divise le modèle en une première partie et une deuxième partie, le premier motif de texture (24) correspondant à la première partie du modèle, le deuxième motif de texture (27) correspondant à la deuxième partie du modèle,
- on grave, à l'aide d'un procédé de gravure à commande numérique, le premier motif sur ledit corps, selon la première partie du modèle, et le deuxième motif sur ledit insert, selon la deuxième partie du modèle,
la deuxième partie étant distante au plus de 0,5 mm et, de préférence, de 0,2 mm, avec la première partie.

10. Procédé selon l'une des revendications 8 ou 9, dans lequel on monte ledit insert dans ledit logement à l'aide de moyens de percussion comprenant une surface de percussion réalisée en un matériau mou, tel du nylon ou un matériau élastomérique.

11. Procédé de fabrication d'un pneumatique dans lequel on cuit une ébauche de pneumatique dans un moule de cuisson selon l'une des revendications 1 à 7.

## Patentansprüche

1. Vulkanisationsform (20) für einen Reifen, wobei die Form mindestens einen Körper umfasst, wie eine Schale (21) oder eine Auskleidung, und mindestens einen Einsatz (22), der herausnehmbar in einer Aufnahme des Körpers montiert ist, wobei der Körper und der Einsatz zusammen eine Formfläche für einen Teil des Reifens wie die Flanke oder den Laufstreifen bilden,
wobei die Formfläche (23) des Körpers ein erstes Texturmuster (24) aufweist,
wobei die Formfläche (25) des Einsatzes ein Kennzeichnungsmuster (26) aufweist,
**dadurch gekennzeichnet, dass** die Formfläche des Einsatzes ferner ein zweites Texturmuster (27) aufweist, das so gewählt ist, dass:
- die Helligkeitsabweichung (L*) zwischen den durch das zweite Texturmuster (27) und das Kennzeichnungsmuster (26) geformten Flächen größer als oder gleich 1,5 und bevorzugt größer als oder gleich 3 ist, so dass die durch das zweite Texturmuster geformte Fläche mit der durch das Kennzeichnungsmuster (26) geformten Fläche kontrastiert, und dass
- die Helligkeitsabweichung (L*) zwischen den durch das erste Texturmuster (24) und das zweite Texturmuster (27) geformten Flächen kleiner als 1,5 und bevorzugt kleiner als 1 ist, so dass das zweite Texturmuster geformte Fläche mit der durch das erste Texturmuster (24) geformten Fläche nicht oder kaum kontrastiert.

2. Form nach dem vorhergehenden Anspruch, bei der das zweite Texturmuster (27) und, bevorzugt, das erste Texturmuster (24) materialeinheitliche vertiefte oder erhabene Ebene von verkürzter oder langgestreckter Form umfassen.

3. Form nach dem vorhergehenden Anspruch, bei der die Elemente von verkürzter Form mit einer Dichte von mindestens fünf Elementen je mm² angeordnet sind und einen mittleren Querschnitt haben, der in einen Kreis mit einem Durchmesser zwischen 0,01 und 1 mm und, bevorzugt, zwischen 0,02 und 0,5 mm einbeschrieben ist, und/oder die Elemente von langgestreckter Form mit einer Schrittweite zwischen jedem Element von höchstens 0,5 mm angeordnet sind und eine mittlere Breite zwischen 0,02 und 0,5 mm haben.

4. Form nach dem vorhergehenden Anspruch, bei der die Elemente in Gruppen ausgebildet sind, wobei die Elemente jeder Gruppe im Wesentlichen identisch sind und dazu geeignet sind, Texturen mit besonderen Kontrastniveaus zu formen.

5. Form nach einem der vorhergehenden Ansprüche, bei der die Formfläche der Körper und Einsätze gemäß einem besonderen Modell ausgeführt ist, wobei das Modell in einen ersten Teil und in einen zweiten Teil unterteilt ist, wobei das erste Texturmuster (24) dem ersten Teil des Modells entspricht, wobei das zweite Texturmuster (27) dem zweiten Teil des Modells entspricht, wobei der zweite Teil höchstens 0,5 mm und, bevorzugt, höchstens 0,2 mm von dem ersten Teil entfernt ist.

6. Form nach einem der vorhergehenden Ansprüche, bei welcher der mittlere Höhen- oder Tiefenunterschied zwischen dem ersten Texturmuster (24) und dem zweiten Texturmuster (27) weniger als 0,2 mm und, bevorzugt, weniger als 0,1 mm beträgt.

7. Form nach einem der vorhergehenden Ansprüche, bei welcher der Körper die Form einer Schale (21) annimmt, die dazu bestimmt ist, die Flanke des Reifens zu formen, wobei sich das erste Texturmuster (24) auf der Formfläche der Schale so erstreckt, dass ein ringförmiges Muster gebildet wird, das die Aufnahme umgibt,
wobei sich das zweite Texturmuster (27) auf der verbleibenden Formfläche des Einsatzes (22) erstreckt.

8. Verfahren zur Herstellung einer Vulkanisationsform (20) für einen Reifen, wobei die Form mindestens einen Körper umfasst, wie eine Schale (21) oder eine Auskleidung, und mindestens einen Einsatz (22), wobei der Körper und der Einsatz zusammen eine Formfläche für einen Teil des Reifens wie die Flanke oder den Laufstreifen bilden, **dadurch gekennzeichnet, dass**:
- man ein erstes Texturmuster (24) auf der Formfläche (23) des Körpers ausführt,
- man ein Kennzeichnungsmuster (26) auf der Formfläche (25) des Einsatzes ausführt,
- man ein zweites Texturmuster (24) auf der Formfläche (25) des Einsatzes ausführt, wobei das zweite Muster so gewählt ist, dass:
- die Helligkeitsabweichung (L*) zwischen den durch das zweite Texturmuster (27) und das Kennzeichnungsmuster (26) geformten Flächen größer als oder gleich 1,5 und bevorzugt größer als oder gleich 3 ist, so dass die durch das zweite Texturmuster geformte Fläche mit der durch das Kennzeichnungsmuster (26) geformten Fläche kontrastiert, und dass
- die Helligkeitsabweichung (L*) zwischen den durch das erste Texturmuster (24) und das zweite Texturmuster (27) geformten Flächen kleiner als 1,5 und bevorzugt kleiner als 1 ist, so dass das zweite Texturmuster geformte Fläche mit der durch das erste Texturmuster (24) geformten Fläche nicht oder kaum kontrastiert,
- man den Einsatz, herausnehmbar, in einer Aufnahme des Körpers montiert.

9. Verfahren nach dem vorhergehenden Anspruch, bei dem die Formfläche der Körper und Einsätze gemäß einem besonderen Modell ausgeführt wird, das die folgenden Schritte umfasst
- mithilfe von digitalen Entwurfsmitteln unterteilt man das Modell in einen ersten Teil und einen zweiten Teil, wobei das erste Texturmuster (24) dem ersten Teil des Modells entspricht, wobei das zweite Texturmuster (27) dem zweiten Teil des Modells entspricht,
- man graviert, mithilfe eines digital gesteuerten Gravurverfahrens, das erste Muster in den Körper, gemäß dem ersten Teil des Modells, und das zweite Muster in den Einsatz, gemäß dem zweiten Teil des Modells,
wobei der zweite Teil höchstens 0,5 mm und, bevorzugt, höchstens 0,2 mm von dem ersten Teil entfernt ist.

10. Verfahren nach einem der Ansprüche 8 oder 9, bei dem man den Einsatz in der Aufnahme mithilfe von Schlagmitteln montiert, die eine aus einem weichen Material wie Nylon oder einem Elastomermaterial ausgeführte Schlagfläche umfassen.

11. Verfahren zur Herstellung eines Reifens, bei dem man einen Reifenrohling in einer Vulkanisationsform nach einem der Ansprüche 1 bis 7 vulkanisiert.

## Claims

1. Mould (20) for curing a tyre, said mould comprising at least one body, such as a shell (21) or a lining, and at least one insert (22) mounted removably in a housing of said body, said body and insert together forming a moulding surface for moulding a part of the tyre, such as the sidewall or the tread,
the moulding surface (23) of said body having a first texture pattern (24),
the moulding surface (25) of said insert having a marking pattern (26),
**characterized in that** the moulding surface of said insert also has a second texture pattern (27) chosen such that:
- the difference in lightness (L*) between the surfaces moulded by the second texture pattern (27) and the marking pattern (26) is greater than or equal to 1.5, preferably greater than or equal to 3, such that the surface moulded by the second texture pattern contrasts with the surface moulded by the marking pattern (26), and such that
- the difference in lightness (L*) between the surfaces moulded by the first texture pattern (24) and the second texture pattern (26) is less than 1.5, preferably less than 1, such that the surface moulded by second texture pattern contrasts barely, if at all, with the surface moulded by the first texture pattern (24).

2. Mould according to the preceding claim, wherein the second texture pattern (27) and, preferably, the first texture pattern (24) comprise integral, recessed or protruding, elements of shortened or lengthened form.

3. Mould according to the preceding claim, wherein the elements of shortened form are disposed with a density at least equal to five elements per mm², and have mean section circumscribed in a circle with a diameter of between 0.01 and 1 mm, preferably between 0.02 and 0.5 mm, and/or
the elements of lengthened form are disposed with a spacing between each element at most equal to 0.5 mm, and have a mean width of between 0.02 and 0.5 mm.

4. Mould according to the preceding claim, wherein said elements are arranged in assemblies, the elements of each assembly being substantially identical and designed to mould textures with particular contrast levels.

5. Mould according to one of the preceding claims, wherein the moulding surface of said bodies and inserts is made according to a particular model, said model being divided into a first part and a second part, the first texture pattern (24) corresponding to the first part of the model, the second texture pattern (27) corresponding to the second part of the model, the second part being at a distance of at most 0.5 mm, preferably 0.2 mm, from the first part.

6. Mould according to one of the preceding claims, wherein the mean difference in height or depth between the first texture pattern (24) and the second texture pattern (27) is less than 0.2 mm, preferably less than 0.1 mm.

7. Mould according to one of the preceding claims, wherein said body is in the form of a shell (21) intended to mould the sidewall of the tyre,
the first texture pattern (24) extending over the moulding surface of said shell so as to form an annular pattern surrounding said housing,
the second texture pattern (27) extending over the remaining moulding surface of the insert (22).

8. Method for manufacturing a mould (20) for curing a tyre, said mould comprising at least one body, such as a shell (21) or a lining, and at least one insert (22), said body and insert together forming a moulding surface for moulding a part of the tyre, such as the sidewall or the tread, **characterized in that**:
- a first texture pattern (24) is made on the moulding surface (23) of said body,
- a marking pattern (26) is made on the moulding surface (25) of said insert,
- a second texture pattern (24) is made on the moulding surface (25) of said insert, the second pattern being chosen such that:
- the difference in lightness (L*) between the surfaces moulded by the second texture pattern (27) and the marking pattern (26) is greater than or equal to 1.5, preferably greater than or equal to 3, such that the surface moulded by the second texture pattern contrasts with the surface moulded by the marking pattern (26), and such that
- the difference in lightness (L*) between the surfaces moulded by the first texture pattern (24) and the second texture pattern (27) is less than 1.5, preferably less than 1, such that the surface moulded by second texture pattern contrasts barely, if at all, with the surface moulded by the first texture pattern (24),
- the insert is fitted, removably, in a housing of said body.

9. Method according to the preceding claim, wherein the moulding surface of said bodies and inserts is made according to a particular model, comprising the following steps:
- using digital design means, the model is divided into a first part and a second part, the first texture pattern (24) corresponding to the first part of the model, the second texture pattern (27) corresponding to the second part of the model,
- using a digitally controlled engraving method, the first pattern is engraved on said body, according to the first part of the model, and the second pattern is engraved on said insert, according to the second part of the model,
the second part being at a distance of at most 0.5 mm, preferably 0.2 mm, from the first part.

10. Method according to either of Claims 8 and 9, wherein said insert is fitted in said housing with the aid of percussion means comprising a percussion surface made of a soft material, such as nylon or an elastomer material.

11. Method for manufacturing a tyre, wherein a green tyre is cured in a curing mould according to one of Claims 1 to 7.
